# EUROPEAN PATENT APPLICATION

(11) **EP 4 761 031 A1**
(43) Date of publication of application: **17.06.2026**
(21) Application number: 25198214.6
(22) Date of filing: 26.08.2025
(51) Int. Cl.: H02H 9/00, H02H 3/08, H02J 7/62

(54) **CHARGING CIRCUIT, POWER SUPPLY INCLUDING THE SAME, AND CHARGING METHOD USING THE SAME**

(30) Priority: 13.12.2024 KR 20240186018
(71) Applicant: Hanwha Solutions Corporation, Jung-gu Seoul 04541 (KR)
(72) Inventor: KIM, Se Jin, 04541 Seoul (KR); HONG, Seok Yong, 04541 Seoul (KR); PARK, Sang Yong, 04541 Seoul (KR); LEE, Ji Cheol, 04541 Seoul (KR)
(74) Representative: Mooser, Sebastian Thomas

(57) **Abstract**

Provided are a charging circuit and a power supply including the same. The charging circuit includes a charging unit connected to a power source and a load, and configured to receive an input voltage applied from the power source, a current limiting unit connecting the power source to the charging unit, and an electronic fuse connecting the power source to the charging unit in parallel with the current limiting unit.

## Description

### BACKGROUND

### 1. Field

The present disclosure relates to a charging circuit, a power supply including the same, and a charging method using the same.

### 2. Description of the Related Art

In power supply systems, circuits that include devices for temporarily storing energy are used to stably and continuously supply power to loads. Such circuits use energy storage devices, such as capacitors, to mitigate voltage fluctuations and to supply power to loads in response to an interruption in power supply. Meanwhile, when such energy storage devices are included, inrush current generated during initial charging and the like must be safely managed.

According to the related art, there is a limitation in simultaneously achieving both safety and efficiency in circuits including energy storage devices. In the related art, mechanical fuses are used to protect circuits from overcurrent or abnormal conditions, but the mechanical fuses have the issues of slow response speed and being non-reusable, which leads to increased maintenance costs.

Although the introduction of electronic fuses (eFuses) can address some of the aforementioned issues, the use of electronic fuses requires a complex digital control system, which may complicate circuit design and reduce reliability. Accordingly, there is a need to develop a technology that simplifies circuit design and enables efficient control of electronic fuses through analog control.

The related art described above is technical information that the present inventors have possessed in order to derive the present disclosure or have acquired in a process of deriving the present disclosure, and is not necessarily a known technology disclosed to the general public before filing the present disclosure.

### SUMMARY

The present disclosure is directed to providing a charging circuit, a power supply including the same, and a charging method using the same. The problem to be solved by the present disclosure is not limited to the above-mentioned problem, and other problems and advantages of the present disclosure not mentioned may be understood by the following description and more clearly understood by the embodiments of the present disclosure. In addition, it will be appreciated that the problems and advantages to be solved by the present disclosure may be realized by means and combinations thereof indicated in the claims.

According to a first aspect of the present disclosure, there is provided a charging circuit including a charging unit connected to a power source and a load, and configured to receive an input voltage applied from the power source, a current limiting unit connecting the power source to the charging unit, and an electronic fuse connecting the power source to the charging unit in parallel with the current limiting unit, wherein the input voltage is applied through the current limiting unit when the electronic fuse is in a first state, and through the electronic fuse when the electronic fuse is in a second state, a state of the electronic fuse transitions from the first state to the second state based on an initial charging completion condition being satisfied while the electronic fuse is in the first state, and the state of the electronic fuse transitions from the second state to the first state based on an abnormality detection condition being satisfied while the electronic fuse is in the second state.

According to an embodiment of the present disclosure, the charging circuit may further include a control unit configured to apply an enable signal to the electronic fuse based on the initial charging completion condition being satisfied, wherein the state of the electronic fuse may transition from the first state to the second state in response to the enable signal being applied.

According to an embodiment of the present disclosure, the initial charging completion condition may include a charging voltage of the charging unit exceeding a reference voltage.

According to an embodiment of the present disclosure, the control unit may include an analog comparator configured to compare the charging voltage and the reference voltage and output the enable signal based on a result of the comparison.

According to an embodiment of the present disclosure, the control unit may further include an auxiliary control unit configured to change the reference voltage, which is set to a first voltage, to a second voltage based on a predetermined condition being satisfied, and the first voltage is set based on a magnitude of the input voltage.

According to an embodiment of the present disclosure, the abnormality detection condition may include a detection of an overcurrent occurrence, and the charging circuit may further include a reference resistor connected to the electronic fuse and used to set a reference current value for determining the overcurrent occurrence.

According to an embodiment of the present disclosure, the charging unit may include a capacitor configured to store an electric charge in response to the input voltage being applied.

According to an embodiment of the present disclosure, the current limiting unit may include an initial charging resistor having a predetermined resistance value determined based on the input voltage and a preset maximum inrush current.

According to an embodiment of the present disclosure, the charging unit may be further configured to supply a power to the load when power delivery from the power source to the load is interrupted.

According to a second aspect of the present disclosure, there is provided a power supply including a power source configured to supply a power to a load, a charging unit connected to the power source and the load, configured to receive an input voltage applied from the power source, and configured to supply the power to the load when power delivery from the power source to the load is interrupted, a current limiting unit connecting the power source to the charging unit, and an electronic fuse connecting the power source to the charging unit in parallel with the current limiting unit, wherein the input voltage is applied through the current limiting unit when the electronic fuse is in a first state, and through the electronic fuse when the electronic fuse is in a second state, a state of the electronic fuse transitions from the first state to the second state based on an initial charging completion condition being satisfied while the electronic fuse is in the first state, and the state of the electronic fuse transitions from the second state to the first state based on an abnormality detection condition being satisfied while the electronic fuse is in the second state.

According to an embodiment of the present disclosure, the charging circuit may further include a control unit configured to apply an enable signal to the electronic fuse based on the initial charging completion condition being satisfied, wherein the state of the electronic fuse may transition from the first state to the second state in response to the enable signal being applied.

According to an embodiment of the present disclosure, the initial charging completion condition may include a charging voltage of the charging unit exceeding a reference voltage.

According to an embodiment of the present disclosure, the control unit may include an analog comparator configured to compare the charging voltage and the reference voltage and output the enable signal based on a result of the comparison.

According to an embodiment of the present disclosure, the control unit may further include an auxiliary control unit configured to change the reference voltage, which is set to a first voltage, to a second voltage based on a predetermined condition being satisfied, and the first voltage is set based on a magnitude of the input voltage.

According to an embodiment of the present disclosure, the abnormality detection condition may include a detection of an overcurrent occurrence, and the power supply may further include a reference resistor connected to the electronic fuse and used to set a reference current value for determining the overcurrent occurrence.

According to an embodiment of the present disclosure, the charging unit may include a capacitor configured to store an electric charge in response to the input voltage being applied.

According to an embodiment of the present disclosure, the current limiting unit may include an initial charging resistor having a predetermined resistance value determined based on the input voltage and a preset maximum inrush current.

According to a third aspect of the present disclosure, there is provided a charging method using a charging circuit, including applying an input voltage to a charging unit through a current limiting unit based on an electronic fuse being in a first state, and applying the input voltage to the charging unit through the electronic fuse based on the electronic fuse being in a second state, wherein a state of the electronic fuse transitions from the first state to the second state based on an initial charging completion condition being satisfied while the electronic fuse is in the first state, and the state of the electronic fuse transitions from the second state to the first state based on an abnormality detection condition being satisfied while the electronic fuse is in the second state.

Other aspects, features, and advantages other than those described above will become apparent from the following drawings, claims, and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exemplary diagram for schematically describing a power supply system;
FIG. 2 illustrates an example of a power supply system according to an embodiment;
FIG. 3 illustrates an example of a power supply system according to another embodiment;
FIG. 4 is a block diagram of a charging circuit according to an embodiment;
FIG. 5 is an exemplary diagram for describing a path through which an input voltage is applied according to a state of an electronic fuse;
FIG. 6 is an exemplary diagram for describing a driving method of the charging circuit according to an embodiment;
FIG. 7 is an exemplary diagram for describing a control unit according to an embodiment;
FIGS. 8 and 9 are graphs for describing a process in which the control unit applies an enable signal according to an embodiment;
FIG. 10 is an exemplary diagram for describing a control unit including an auxiliary control unit according to an embodiment;
FIG. 11 is a graph for describing a process of changing a reference voltage according to an embodiment;
FIG. 12 is a diagram illustrating a charging circuit including a reference resistor according to an embodiment; and
FIG. 13 is an exemplary diagram for describing a power supply system according to an embodiment.

### DETAILED DESCRIPTION

The effects and features of the present disclosure and the accompanying methods thereof will become apparent from the following description of the embodiments, taken in conjunction with the accompanying drawings. However, it should be understood that the present disclosure is not limited to the embodiments presented below, but may be implemented in various other forms and includes all transformations, equivalents, and substitutes included in the spirit and scope of the present disclosure. It should be understood, however, that the description of the embodiments is provided to enable the present disclosure to be complete, and will fully convey the scope of the disclosure to one of ordinary skill in the art to which the present disclosure belongs. In explaining the present disclosure, if it is determined that a detailed description of a related known technology may obscure the gist of the present disclosure, the detailed description will be omitted.

The terms used in the present disclosure are used to describe only specific embodiments or examples, and are not intended to limit the present disclosure. Unless otherwise defined, all terms used herein have the same meanings as those generally understood by those with ordinary knowledge in the field of art to which the present disclosure belongs.

In the present specification, singular forms are intended to include plural forms as well, unless the context clearly indicates otherwise. In addition, the terms "include" or "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

In addition, terms including ordinal numbers such as "first" or "second" used herein may be used to describe various components, but the components are not limited by the terms, and the terms are used only for the purpose of distinguishing one component from another. These terms are used only for the purpose of distinguishing one component from another component.

Phrases such as "in an embodiment," " according to an embodiment," "relating to an embodiment," "according to one embodiment implementation," and the like appearing in various places in the present specification are not necessarily all referring to the same embodiment. In addition, throughout the specification, "embodiment" is a random division for easily describing the present disclosure in the present specification, and each embodiment need not be mutually exclusive. For example, configurations mentioned to describe one embodiment may be applied and implemented in other embodiments and may be changed and applied and implemented without departing from the idea and scope of the present disclosure.

Some embodiments of the disclosure may be represented by functional block configurations and various processing operations. Some or all of these functional blocks may be implemented by various numbers of hardware and/or software configurations that perform particular functions. For example, the functional blocks of the present disclosure may be implemented by one or more microprocessors or by circuit configurations for a certain function.

For example, the functional blocks of the present disclosure can be implemented in various programming or scripting languages. The functional blocks may be implemented by algorithms executed in one or more processors. In addition, the present disclosure may employ conventional techniques for electronic environment setting, signal processing, and/or data processing. Terms such as "mechanism," "element," "means," and "configuration" can be used broadly and are not limited to mechanical and physical configurations. In addition, terms such as "unit," "-or/-er," and "module" denote a unit that processes at least one function or operation, which may be implemented in hardware or software, or implemented in a combination of hardware and software.

In addition, a connection line or a connection member between components shown in the drawings is merely a functional connection and/or a physical or circuit connection. In an actual device, connections between components may be represented by various functional connections, physical connections, or circuit connections that are replaceable or added.

Further, some components in the drawings may be shown to be exaggerated in size or proportion. In addition, components shown in one drawing may not be shown in other drawings.

Hereinafter, the present disclosure will be described in detail with reference to the accompanying drawings.

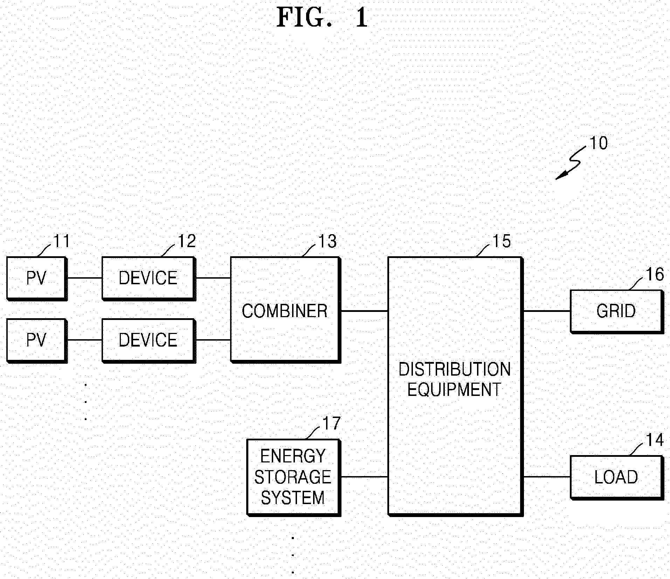

FIG. 1 is an exemplary diagram for schematically describing a power supply system.

Referring to FIG. 1, a power supply system 10 may include a photovoltaic (PV) module 11, a device 12, a load 14, and/or distribution equipment 15. The power supply system 10 may be connected to an external power grid 16.

At least one photovoltaic module 11 may be installed on a building roof, exterior wall, or the like, and may generate power. A plurality of photovoltaic modules 11 may be connected together to form a photovoltaic module array.

The photovoltaic module 11 may be connected to the device 12. For example, at least one device 12 may be connected to each photovoltaic module 11. In an example, when one device 12 is connected to each photovoltaic module 11, the number of devices 12 included in the power supply system 10 may be equal to the number of photovoltaic modules 11.

The device 12 may be a PCS (Power Conditioning System or Power Conversion System), that performs power conversion on the power generated by the photovoltaic module 11. For example, the device 12 may perform a predetermined conversion on the power generated by the photovoltaic module 11 and supply the converted power to other components (e.g., the power grid 16, the load 14, and/or the like) of the power supply system 10.

In some embodiments, the device 12 may be a module-level power electronics (MLPE). For example, the device 12 may be an optimizer or a microinverter (MI).

In an example, when the device 12 is an optimizer, the device 12 may regulate power generated by the photovoltaic module 11 and output the regulated power to an inverter (e.g., a string inverter). A current converted by the inverter (e.g., from direct current (DC) current to alternating current (AC) current) may be output to the power grid 16 or the load 14.

In another example, when the device 12 is a microinverter, the device 12 may convert power generated by the photovoltaic module 11 (e.g., from DC current to AC current). The current converted by the device 12 may be output to the power grid 16 or the load 14.

As necessary, the power supply system 10 may further include a combiner 13. At least some of the devices 12 may be connected to the distribution equipment 15 via the combiner 13. For example, power output from a plurality of devices 12 may be combined into a single output at the combiner 13 and supplied to the distribution equipment 15.

In some embodiments, the devices 12 may be connected to the distribution equipment 15 via a power path that does not include the combiner 13. At least one of the devices 12 may be connected to the distribution equipment 15 via the power path that does not include the combiner 13, and at least one other device 12 may be connected to the distribution equipment 15 via the combiner 13.

The combiner 13 may perform control of voltage, current, and/or power output from the device 12 based on power supply states of the photovoltaic module 11, the device 12, and/or the power grid 16, and the operation mode of the combiner 13 may be set to a diagnostic mode, an operation mode, or the like.

In some embodiments, the combiner 13 may include an energy management system (EMS) that controls the operation of the combiner 13. The EMS may perform control of voltage, current, and/or power supplied to or output from the combiner 13 based on power supply states of the photovoltaic module 11, the device 12, and/or the power grid 16, and may set the operation mode of the combiner 13 to a diagnostic mode, an operation mode, or the like.

The load 14 refers to an object installed in an electricity consumer such as a residential building, commercial facility, or factory, and operating by receiving at least one of energy generated by the photovoltaic module 11, energy stored in an energy storage system 17, and energy supplied from the power grid 16. For example, when the electricity consumer to which power is supplied is a residential building, the load 14 may include home appliances such as a washing machine, a refrigerator, or a television (TV).

The power grid 16 may include an infrastructure system for generating, transmitting, and distributing power. For example, the power grid 16 may include infrastructure systems such as power plants, substations, and power line networks. In some embodiments, the power grid 16 may deliver electric energy generated at a power plant to the power supply system 10 or deliver surplus power generated by the power supply system 10 to the outside.

For example, commercial power transmitted from the power grid 16 through utility poles may be supplied to electricity consumers via a transformer. For example, the power supply system 10 may also be implemented as an off-grid system that is not connected to the power grid 16.

In some embodiments, the power supply system 10 may further include at least one energy storage system 17. As necessary, the power supply system 10 may include a plurality of energy storage systems 17. The energy storage system 17 may receive and store power generated by the photovoltaic module 11 and/or power delivered from the power grid 16. By storing power and supplying the power to the load 14 when needed, the energy storage system 17 may supply power efficiently.

The energy storage system 17 may include a battery for storing power and a power conversion module. The battery may be provided with a battery management system (BMS) that monitors the state of charge (SOC), state of health (SOH), voltage, and/or current of the battery, performs diagnosis on the battery, and provides safety functions such as current interruption.

In some embodiments, the power conversion module may be a power conversion system (PCS) configured to perform a power conversion between a battery side and an opposite side. For example, the PCS may perform a conversion between DC current on the battery side and AC current on the opposite side. In an example, the PCS may include a bidirectional DC-DC converter connected to the battery for voltage conversion, and a bidirectional inverter that connects the DC-DC converter to the outside of the energy storage system 17.

In some embodiments, the energy storage system 17 may further include an energy management system (EMS) that controls the operation of the energy storage system 17. The EMS may perform control of voltage, current, and/or power supplied to or output from the energy storage system 17 based on power supply states of the battery and/or the power grid 16, and may set the operation mode of the energy storage system 17 to a diagnostic mode, an operation mode, or the like.

As necessary, the EMS coupled to a predetermined component of the power supply system 10 may control not only the operation of the corresponding component, but also the operation of other components of the power supply system 10. For example, the EMS coupled to the combiner 13 or the energy storage system 17 may control operations of both the combiner 13 and the energy storage system 17.

In some embodiments, the distribution equipment 15 may provide electrical connections between components of the power supply system 10 and may control a power flow within the power supply system 10. For example, the distribution equipment 15 may electrically connect the photovoltaic module 11 to the load 14. In an example, by being connected to the device 12 coupled to the photovoltaic module 11, the distribution equipment 15 may electrically connect the photovoltaic module 11 to the load 14. As necessary, the distribution equipment 15 may be further connected to at least one of the energy storage system 17 and the power grid 16.

For example, the distribution equipment 15 may be a distribution panel that distributes power within the power supply system 10. In an example, the distribution equipment 15 may be a main service panel (MSP) that distributes power generated by the photovoltaic module 11 to the load 14 or the like.

In another example, the distribution equipment 15 may be a main controller that performs power distribution within the power supply system and controls each of the devices 12. In an example, the main controller may include a switch, a circuit breaker, and a control unit. The switch, the circuit breaker, and the control unit may be implemented as separate devices, or at least some thereof may be included in a single device.

The main controller may include a switch that controls electrical connections between components connected to the main controller, such as the device 12 and the load 14. For example, the main controller may include a relay, a power semiconductor, or the like that provides or interrupts electrical connections to the device 12 and/or the energy storage system 17 based on an operating state of each component of the power supply system 10.

The main controller may perform a rapid shutdown to stop power generation of the photovoltaic module 11 in an emergency situation, such as the occurrence of an overcurrent in the power supply system 10. To this end, the main controller may include a circuit breaker that disconnects the connection between the device 12 and the load 14.

The main controller may include a control unit that generally controls the operation of the main controller. The control unit may also control the operation of other components of the power supply system 10, such as the device 12 or the energy storage system 17, in addition to the main controller.

The control unit may perform control of voltage, current, and/or power that is output from or supplied to each component, based on power supply states of the photovoltaic module 11, the device 12, the combiner 13, the load 14, the power grid 16, and/or the energy storage system 17. In addition, the control unit may set the operation mode of the main controller, the device 12, and/or the energy storage system 17 to a diagnostic mode, an operation mode, or the like.

For example, the control unit may control the photovoltaic module 11, the device 12, the combiner 13, and/or the energy storage system 17 based on the state of the power supply system 10. In an example, the control unit may control other components of the power supply system 10 by enabling the main controller to perform communication with other components of the power supply system 10 (e.g., the device 12). Communication between the main controller and other components of the power supply system 10 may be performed using a power line communication (PLC) method, but the present disclosure is not limited thereto.

In an example, the control unit may control the device 12 based on a power generation state of the photovoltaic module 11. For example, the main controller may receive a control command from a server that monitors the power generation state of the photovoltaic module 11, and the control unit may control the device 12 according to the control command.

When power supply from the power grid 16 is not stable (e.g., in an off-grid situation or the like), the main controller may supply power to at least some of the loads 14. For example, when power supply from the power grid 16 is not stable, the main controller may preferentially supply power generated by the photovoltaic module 11 and/or power stored in the energy storage system 17 to a backup load that has a relatively higher need for stable power supply.

In some embodiments, the power supply system 10 may further include an auxiliary power generation device (e.g., a diesel generator or the like) that generates power in a manner separate from photovoltaic generation. For example, the auxiliary power generation device may be additionally connected to the distribution equipment 15. When the photovoltaic module 11 and the energy storage system 17 alone cannot supply sufficient power to the backup load due to environmental factors such as time of day or weather, the main controller may supply power generated by the auxiliary power generation device to the backup load.

The control unit may be implemented by at least one processor. The processor may process instructions of a computer program by performing basic arithmetic, logic, and input/output operations. Here, the instructions may be provided from an internal memory of the main controller or an external device. In addition, the processor may generally control operations of other components included in the main controller.

For example, the processor may perform at least a portion of data analysis, processing, and result information generation to perform the above-described operations using at least one of rule-based logic or artificial intelligence (AI) algorithms such as machine learning, neural networks, or deep learning algorithms. Examples of neural networks may include neural network models based on architectures such as a convolutional neural network (CNN), a deep neural network (DNN), and a recurrent neural network (RNN).

For example, the processor may be implemented as an array of multiple logic gates, or as a combination of a general-purpose microprocessor and a memory in which a program executable by the microprocessor is stored. For example, the processor may include a general-purpose processor, a central processing unit (CPU), a microprocessor, a digital signal processor (DSP), a controller, a microcontroller, a state machine, or the like.

In some environments, the processor may include an application-specific integrated circuit (ASIC), a programmable logic device (PLD), a field-programmable gate array (FPGA), or the like. For example, the processor may refer to a combination of processing devices such as, a combination of a DSP and a microprocessor, a combination of a plurality of microprocessors, a combination of one or more microprocessors in conjunction with a DSP core, or a combination of any other such configurations.

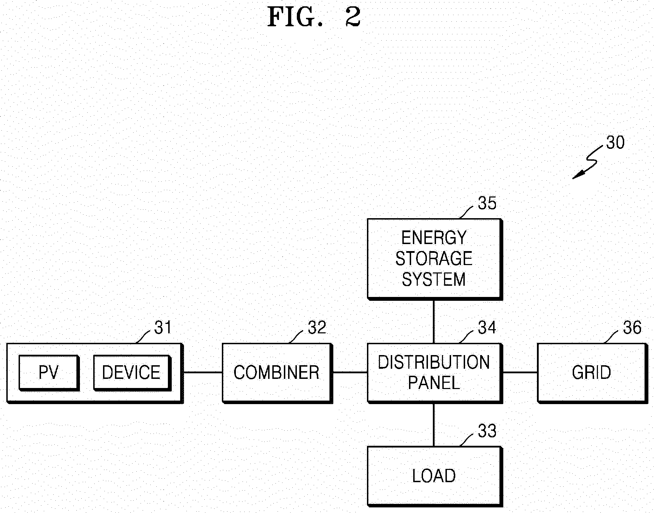

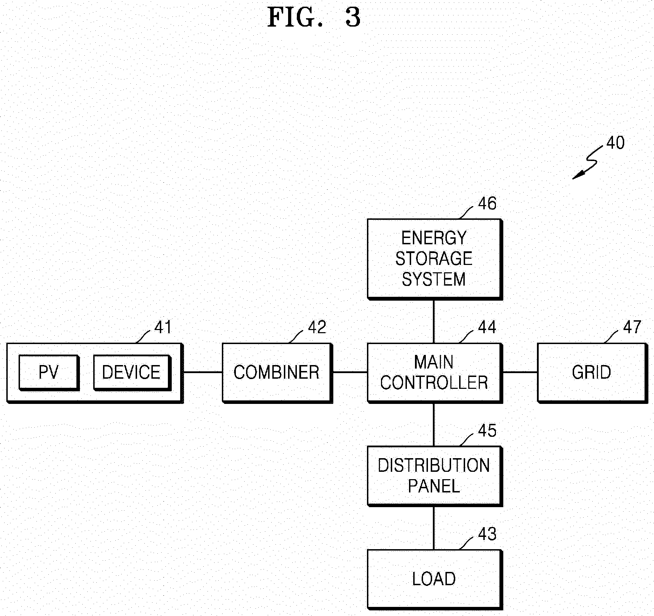

By combining at least some of the components described above, the power supply system 10 may be implemented in various forms. Hereinafter, various embodiments of the power supply system 10 will be described with reference to FIGS. 2 and 3. However, the implementation of the power supply system 10 is not limited to the embodiments described below.

FIG. 2 illustrates an example of a power supply system according to an embodiment.

Referring to FIG. 2, a power supply system 30 according to an embodiment may include a photovoltaic power generation device 31, a combiner 32, a load 33, a distribution panel 34, and an energy storage system 35. In addition, the power supply system 30 may be connected to an external power grid 36.

In an embodiment, the energy storage system 35 may be connected to the distribution panel 34 and may be charged or discharged. In another embodiment, the energy storage system 35 may be connected to the combiner 32 and may be charged or discharged.

By including the energy storage system 35 in the power supply system 30, power stored in the energy storage system 35 may be used to supply power to the load 33 when the photovoltaic power generation device 31 alone cannot meet the power demand of the load 33. In addition, when the power generated by the photovoltaic power generation device 31 exceeds the amount of power required to supply power to the load 33, the excess power may be stored in the energy storage system 35. In some embodiments, when the state of charge of the energy storage system 35 is below a threshold and the power generated by the photovoltaic power generation device 31 does not exceed the amount of power required for the load 33, power supplied from the power grid 36 may be used to charge the energy storage system 35.

Thus, the power supply system 30 may efficiently supply power to the load 33 by using the energy storage system 35.

In some embodiments, the combiner 32 may perform control of voltage, current, and/or power output from the photovoltaic power generation device 31 based on power supply states of the photovoltaic power generation device 31, the load 33, and/or the power grid 36, and the operation mode of the combiner 32 may be set to a diagnostic mode, an operation mode, or the like.

In some embodiments, the energy storage system 35 may perform control of voltage, current, and/or power supplied to or output from the energy storage system 35 based on power supply states of the photovoltaic power generation device 31, the load 33, and/or the power grid 36, and the operation mode of the energy storage system 35 may be set to a diagnostic mode, an operation mode, or the like.

In an embodiment, the power supply system 30 may further include a sub-panel (not shown) connected to the distribution panel 34. In this case, at least one photovoltaic power generation device 31 may be connected to the sub-panel via the combiner 32, and at least one other photovoltaic power generation device 31 may be directly connected to the sub-panel.

In some embodiments, at least one energy storage system 35 may be integrated into the power supply system 30 by being connected to the combiner 32, the distribution panel 34, or the sub-panel.

For example, at least one photovoltaic power generation device 31 may be connected to the distribution panel 34 via a power path that does not include the combiner 32. For example, at least one photovoltaic power generation device 31 may be connected to the distribution panel 34 via a power path that does not include the combiner 32, while at least one other photovoltaic power generation device 31 may be connected to the distribution panel 34 via the combiner 32.

In an embodiment, at least one photovoltaic power generation device 31 may be connected to the sub-panel via the combiner 32, and at least one other photovoltaic power generation device 31 may be directly connected to the sub-panel.

By including the sub-panel that provides additional capacity, the power supply system 30 may increase the total generation capacity of photovoltaic power generation devices 31 that can be integrated into the power supply system 30.

FIG. 3 illustrates an example of a power supply system according to another embodiment.

Referring to FIG. 3, a power supply system 40 according to an embodiment may include a photovoltaic power generation device 41, a combiner 42, a load 43, a main controller 44, a distribution panel 45, and an energy storage system 46. In addition, the power supply system 40 may be connected to an external power grid 47.

In some embodiments, the main controller 44 illustrated in FIG. 3 may correspond to the main controller described above with reference to FIG. 1.

The combiner 42 may electrically connect at least one photovoltaic power generation device 41 to the main controller 44. For example, the combiner 42 may combine power output from at least one photovoltaic power generation device 41 into a single output and supply the combined power to the main controller 44.

The main controller 44 may electrically connect the combiner 42, the distribution panel 45, and the power grid 47 to each other. In addition, the main controller 44 may connect the above-described components to auxiliary power sources such as the energy storage system 46 and/or an auxiliary power generation device (e.g., a diesel generator or the like). For example, the main controller 44 may output power supplied from the combiner 42 to the distribution panel 45, the energy storage system 46, and/or the power grid 47. The main controller 44 may also output power supplied from the power grid 47 to the distribution panel 45 or the energy storage system 46. In addition, the main controller 44 may output power supplied from the energy storage system 46 to the distribution panel 45.

The distribution panel 45 may electrically connect the main controller 44 to at least one load 43. Through this configuration, the power supply system 40 may supply power generated by the photovoltaic power generation device 41 to the load 43 via the distribution panel 45.

By including the main controller 44, the power supply system 40 may integrate a plurality of energy storage systems 46, the auxiliary power generation device, and/or the like into the power supply system 40, thereby enabling stable power supply. In addition, even in an off-grid environment in which stable power cannot be supplied from the power grid 47, the power supply system 40 may reliably supply power to the load 43, such as a backup load.

In some embodiments, the main controller 44 may perform control of voltage, current, and/or power that is output from or supplied to each component, based on states of the photovoltaic power generation device 41, the load 43, the energy storage system 46, and/or the power grid 47, and the operation mode of the main controller 44, the photovoltaic power generation device 41, and/or the energy storage system 46 may be set to a diagnostic mode, an operation mode, or the like.

In an embodiment, the power supply system 40 may further include a sub-panel (not shown) that is connected to the main controller 44 and is distinct from the distribution panel 45. In this case, at least one backup load, which requires relatively higher power supply stability, among the loads 43 may be connected to the sub-panel, and at least one non-backup load, which requires relatively lower power supply stability, among the loads 43 may be connected to the distribution panel 45.

The main controller 44 may electrically connect the combiner 42, the distribution panel 45, the energy storage system 46, the power grid 47, and the sub-panel to each other. The main controller 44 may supply power provided from the combiner 42, the energy storage system 46, and/or the power grid 47 to at least one non-backup load via the distribution panel 45, and to the backup load via the sub-panel.

In an embodiment, the power supply system 40 may further include a sub-panel that is connected to the main controller 44 and is distinct from the distribution panel 45, and the power grid 47 may be connected to the distribution panel 45 rather than the main controller 44. That is, the main controller 44 may electrically connect the combiner 42, the distribution panel 45, the energy storage system 46, and the sub-panel to each other, and the distribution panel 45 may electrically connect the main controller 44, the non-backup load, and the power grid 47 to each other.

For example, the power supply system 40 may be implemented by connecting the main controller 44, which connects the combiner 42 to the energy storage system 46, to the distribution panel 45 pre-installed to connect at least one load 43 to the power grid 47.

Through this configuration, the power supply system 40 may reliably supply power to the load 43, such as a backup load, even in an off-grid environment in which stable power cannot be supplied from the power grid 47.

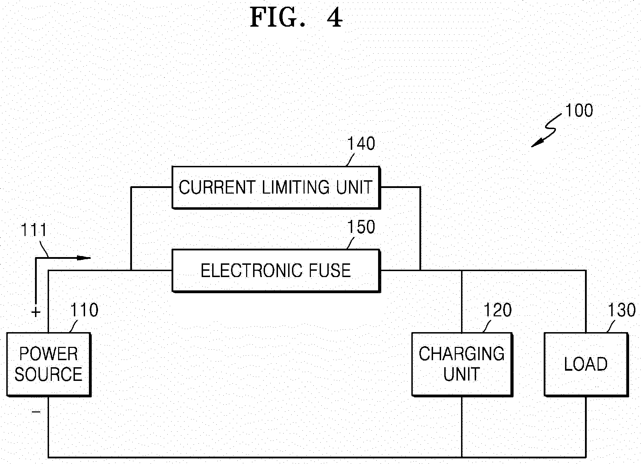

FIG. 4 is a block diagram of a charging circuit according to an embodiment.

Referring to FIG. 4, a charging circuit 100 according to an embodiment may include a power source 110, a charging unit 120, a load 130, a current limiting unit 140, and an electronic fuse 150. Only components related to the embodiment are shown in the charging circuit 100 illustrated in FIG. 4. Accordingly, it will be understood by those skilled in the art that the charging circuit 100 may further include other general-purpose components in addition to the components illustrated in FIG. 4.

In an embodiment, the power source 110 may include a power source that supplies power to the charging unit 120 and the load 130. In an embodiment, the power source 110 may include, but is not limited to, a power generation device that generates power using an internal generation device (e.g., a photovoltaic panel or the like), a storage device that stores pre-generated power (e.g., a battery or the like), or a power supply device (e.g., an alternating current to direct current (AC-DC) converter or a direct current to direct current (DC-DC) converter) that delivers power from the power generation device, the storage device, and/or an external power grid.

In an embodiment, the charging unit 120 may be charged by receiving power from the power source 110. For example, the charging unit 120 may be connected to both the power source 110 and the load 130. The charging unit 120 may receive an input voltage 111 from the power source 110 and may be charged by accumulating electric charges corresponding to the applied input voltage 111.

In an embodiment, the charging unit 120 may be connected between the power source 110 and the load 130, and may supply power to the load 130 when power delivery from the power source 110 to the load 130 is interrupted. For example, the charging unit 120 may be charged using the input voltage 111 applied by the power source 110 while the power source 110 supplies power to the load 130, and may supply the stored power to the load 130 when the power source 110 stops applying the input voltage 111.

That is, the charging unit 120 according to an embodiment may function as a backup power source for the load 130. The charging circuit 100 may include a circuit for charging the charging unit 120 so that the charging unit 120 can serve as a backup power source for the load 130.

In an example, when a failure occurs in the power source 110 or when an electrical connection issue arises with the power source 110, power supply from the power source 110 to the load 130 may be interrupted, and in such a case, the power stored in the charging unit 120 may be supplied to the load 130.

In an embodiment, the load 130 may consume power supplied from the power source 110 or the charging unit 120. For example, the load 130 may include at least one electronic device that directly consumes power In another example, the load 130 may include a power supply device (e.g., an inverter) that delivers power to the at least one electronic device that consumes power, but the present disclosure is not limited thereto. In an embodiment, negative terminals of the charging unit 120 and the load 130 may form a common ground, thereby improving the stability of the circuit.

In an embodiment, the charging circuit 100 may include the current limiting unit 140 and an electronic fuse 150 that connect the power source 110 to the charging unit 120.

For example, the current limiting unit 140 and the electronic fuse 150 may be provided in parallel, and the electronic fuse 150 may connect the power source 110 to the charging unit 120 in parallel with the current limiting unit 140.

In an embodiment, the current limiting unit 140 may limit a current that flows from the power source 110 to the charging unit 120.

The current limiting unit 140 according to an embodiment may prevent excessive current from flowing through the circuit by outputting a limited current in response to the input voltage 111 being applied from the power source 110.

In an embodiment, the electronic fuse 150 may automatically interrupt the circuit in a hazardous situation to protect the circuit. In an embodiment, the electronic fuse 150 may protect the circuit in a hazardous situation by interrupting the electrical connection of a specific section when a predetermined condition is satisfied.

Unlike mechanical fuses in the related art, the electronic fuse 150 may effectively protect the circuit even under repeated hazardous situations by providing fast response time and the capability of being reset.

The charging circuit 100 according to an embodiment may be applicable to various technical fields including a configuration in which the charging unit 120 is connected between the power source 110 and the load 130. In an example, the charging circuit 100 illustrated in FIG. 4 may constitute at least a part of the power supply system 10 described above with reference to FIG. 1 and the like.

The charging circuit 100 may be applied, for example, to a backup power system that supplements a main power source when the main power source is cut off or unstable, a peak output support system that responds to momentary high power demands, a battery load reduction system that reduces the load on a battery to prevent overdischarge and improve power efficiency, or the like, but the present disclosure is not limited thereto.

In an example, the charging circuit 100 may be combined with a power source that either generates power independently or supplies power received from other components to still other components, thereby implementing a power supply. For example, the power supply may be implemented as a switched-mode power supply (SMPS), and may constitute at least a part of the main controller or the energy storage system 17 described above with reference to FIG. 1, but the present disclosure is not limited thereto.

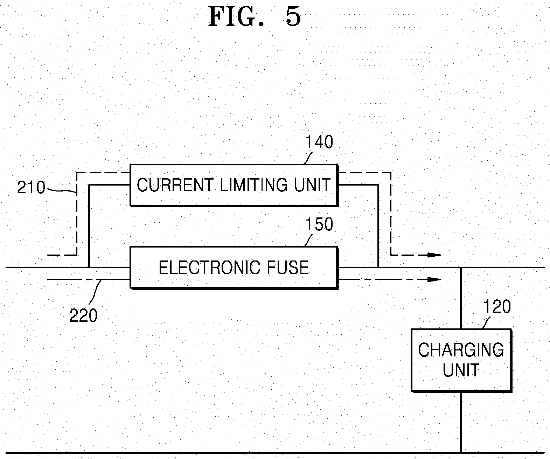

FIG. 5 is an exemplary diagram for describing a path through which an input voltage is applied according to a state of the electronic fuse.

Referring to FIG. 5, the input voltage 111 may be applied to the charging unit 120 through a first path 210 including the current limiting unit 140 or a second path 220 including the electronic fuse 150.

In an embodiment, the electronic fuse 150 may have a plurality of states. For example, the electronic fuse 150 may have an on/off state, in which the on state of the electronic fuse 150 represents a state in which an electrical connection is provided within the electronic fuse 150, and the off state of the electronic fuse 150 represents a state in which the electrical connection within the electronic fuse 150 is interrupted.

In an example, when the electronic fuse 150 is in the on state, an electrical connection is provided within the electronic fuse 150, so that the input voltage 111 may be applied through the electronic fuse 150. For example, the current limiting unit 140 may have a relatively high resistance value with respect to the electronic fuse 150, and the electronic fuse 150 may have a relatively low resistance value with respect to the current limiting unit 140. In this case, when the electronic fuse 150 is in the on state, both the first path 210 and the second path 220 are electrically connected, and the input voltage 111 may be applied through the second path 220, which has a relatively low resistance value.

In another example, when the electronic fuse 150 is in the off state, the electrical connection within the electronic fuse 150 is interrupted, and the input voltage 111 may be applied through the current limiting unit 140, which is connected in parallel with the electronic fuse 150.

In an embodiment, the electronic fuse 150 may include a switching element for providing or interrupting an electrical connection. In an example, the switching element may include a field effect transistor (FET), a relay, and/or a silicon controlled rectifier (SCR), but the present disclosure is not limited thereto.

That is, the electronic fuse 150 may have two or more states for providing or interrupting an electrical connection, and a specific state of the electronic fuse 150 may transition to another state when a certain condition is satisfied.

For example, the state of the electronic fuse 150 may transition from a first state to a second state based on the condition that the electronic fuse 150 is in the first state and an initial charging completion condition is satisfied. In addition, for example, the state of the electronic fuse 150 may transition from the second state to the first state based on the condition that the electronic fuse 150 is in the second state and an abnormality detection condition is satisfied. In this case, the first state may represent the off state of the on/off state, and the second state may represent the on state of the on/off state.

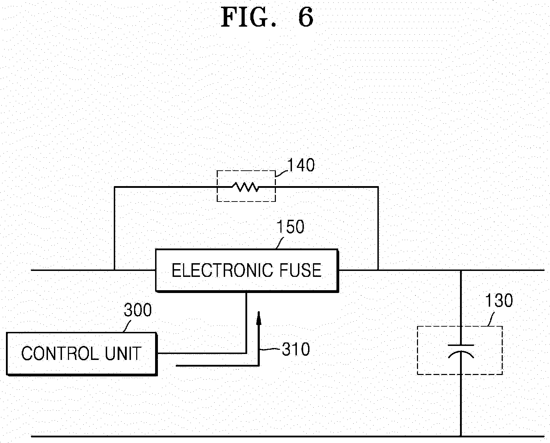

Specific situations in which the state of the electronic fuse 150 transitions will be described later with reference to FIG. 6 and the like.

FIG. 6 is an exemplary diagram for describing a driving method of the charging circuit according to an embodiment.

Referring to FIG. 6, the charging unit 120 according to an embodiment may include a capacitor that stores electric charges in response to the input voltage 111 being applied. For example, the charging unit 120 may include at least one electrolytic capacitor.

In an embodiment, the charging unit 120 may be implemented as a supercapacitor having a capacitance of 1 farad (F) or more. The supercapacitor may be designed to have a high energy density and may store a large amount of energy. As the amount of energy that can be stored in the charging unit 120 increases, the charging unit 120 may perform a voltage smoothing function more stably.

The charging unit 120 according to an embodiment may further include a bleeder resistor that induces the capacitor to discharge. The bleeder resistor may safely discharge residual voltage stored in the capacitor, thereby improving the safety and reliability of the circuit. For example, the bleeder resistor may enhance the stability of the circuit by allowing the capacitor to discharge slowly when power supply from the power source 110 is interrupted.

The current limiting unit 140 according to an embodiment may include an initial charging resistor having a resistance value that is predetermined based on the input voltage 111 and a preset maximum inrush current."

In an embodiment, an inrush current may occur at the moment when power is first supplied to the charging circuit 100. The inrush current is a peak current that occurs temporarily and may cause damage to various components constituting the charging circuit 100. By including an initial charging resistor that limits the inrush current, the current limiting unit 140 may protect the circuit and improve the stability of power supply.

In an embodiment, when the charging unit 120 includes a high-capacitance capacitor, the charging unit 120 may cause an inrush current during initial charging, and thus, the charging circuit 100 may apply the input voltage 111 through the current limiting unit 140 including an initial charging resistor, thereby protecting the circuit and improving the stability of power supply.

In some embodiments, the maximum inrush current refers to a maximum current allowable in the charging circuit 100, and those skilled in the art may set the maximum inrush current of the charging circuit 100 based on the electrical characteristics of various components constituting the charging circuit 100.

In an embodiment, when the maximum current allowable in the charging circuit 100 is I, the maximum inrush current may be set to I. In this case, when the input voltage 111 is V, the initial charging resistor may be designed to have a resistance value of R=V/I or more in order to prevent the inrush current from exceeding I.

In some embodiments, the electronic fuse 150 in the on state may have a lower resistance value than that of the initial charging resistor. For example, the electronic fuse 150 in the on state may have an extremely low resistance value, such as 1/100 or less of the resistance value of the initial charging resistor, thereby implementing the second path 220 with substantially no resistance compared to the current limiting unit 140.

The charging circuit 100 according to an embodiment may further include a control unit 300 that applies an enable signal 310 to the electronic fuse 150 based on the initial charging completion condition being satisfied.

In an embodiment, the initial charging completion condition may indicate a criterion representing that initial charging of the charging unit 120 has been completed, and the enable signal 310 may indicate a control signal for controlling the electronic fuse 150 so that the state of the electronic fuse 150 transitions.

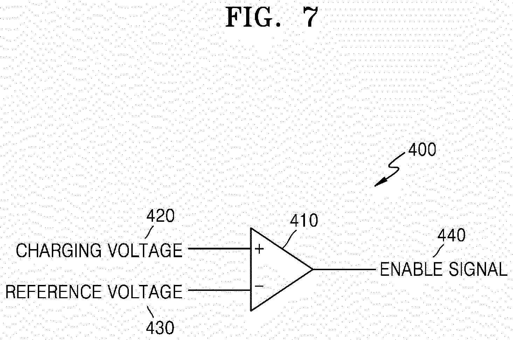

In some embodiments, a specific process for determining whether the initial charging completion condition is satisfied will be described later with reference to FIG. 7 and the like.

In an embodiment, the state of the electronic fuse 150 may transition from the first state to the second state in response to the enable signal 310 being applied.

In an example, the electronic fuse 150 may be in the off state during an initial charging state. In this case, since the second path 220 including the electronic fuse 150 is interrupted, the input voltage 111 may be applied through the first path 210 including the current limiting unit 140.

Subsequently, the control unit 300 may apply the enable signal 310 to the electronic fuse 150 when the initial charging completion condition is satisfied. The state of the electronic fuse 150 to which the enable signal 310 is applied may transition from the off state to the on state.

Thereafter, the electronic fuse 150 may be in the on state after the initial charging is completed. In this case, the input voltage 111 may be applied through the second path 220, which has substantially no resistance, rather than through the first path 210, which has a relatively high resistance.

Hereinafter, a specific process for determining whether the initial charging completion condition is satisfied will be described with reference to FIG. 7 and the like.

FIG. 7 is an exemplary diagram for describing a control unit according to an embodiment. In some embodiments, a control unit 400 illustrated in FIG. 7 may correspond to the control unit 300 illustrated in FIG. 6, and an enable signal 440 illustrated in FIG. 7 may correspond to the enable signal 310 illustrated in FIG. 6.

In an embodiment, the initial charging completion condition may include a charging voltage 420 of the charging unit 120 exceeding a reference voltage 430. That is, in an embodiment, when the charging voltage 420 of the charging unit 120 exceeds the reference voltage 430, the initial charging completion condition may be satisfied.

In the present disclosure, the charging voltage 420 refers to a voltage value representing the energy charged in the charging unit 120. For example, in a case in which the charging unit 120 includes a capacitor, the charging voltage 420 may represent a voltage across the capacitor. The charging circuit 100 according to an embodiment may include at least one voltage sensor for detecting the charging voltage 420 from the charging unit 120.

Referring to FIG. 7, the control unit 400 according to an embodiment may include an analog comparator 410 that compares the charging voltage 420 and the reference voltage 430 and outputs the enable signal 440 based on a result of the comparison. For example, the control unit 400 may include the analog comparator 410 that does not output the enable signal 440 when the charging voltage 420 does not exceed the reference voltage 430, and outputs the enable signal 440 when the charging voltage 420 exceeds the reference voltage 430.

When the initial charging completion condition is satisfied, the state of the electronic fuse 150 may transition without manual operation by the operation of the control unit 400 including the analog comparator 410. For example, the state of the electronic fuse 150 to which the enable signal 440 output from the analog comparator 410 is applied may transition from the off state to the on state, and as a result, the path through which the input voltage 111 is applied may change from the first path 210 to the second path 220.

In an embodiment, the reference voltage 430 may be set to a fixed voltage value. For example, the reference voltage 430 may be fixed to a first voltage determined based on the magnitude of the input voltage 111. For example, the first voltage may be set to a level ranging from 90% to 99% of the input voltage 111. For example, the first voltage may be set to a level of 95% of the input voltage 111, but the present disclosure is not limited thereto.

Accordingly, since no separate digital control may be involved in the process of generating the enable signal 440 used for transitioning the state of the electronic fuse 150, the stability of the charging circuit 100 may be improved.

In addition, when the initial charging of the charging unit 120 is completed, the state of the electronic fuse 150 may automatically transition through analog control performed by the control unit 400, so that the power supply path may be changed at an appropriate time without separate operation.

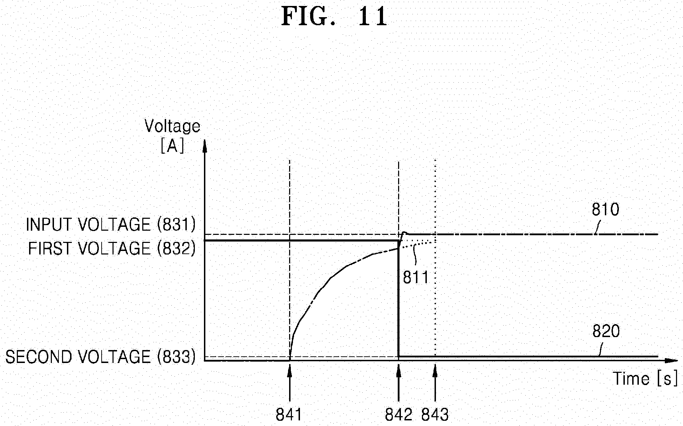

In another embodiment, the reference voltage 430 may be changed to have any one of two or more voltage values. A specific process in which the reference voltage 430 is changed according to an embodiment will be described later with reference to FIG. 11 and the like.

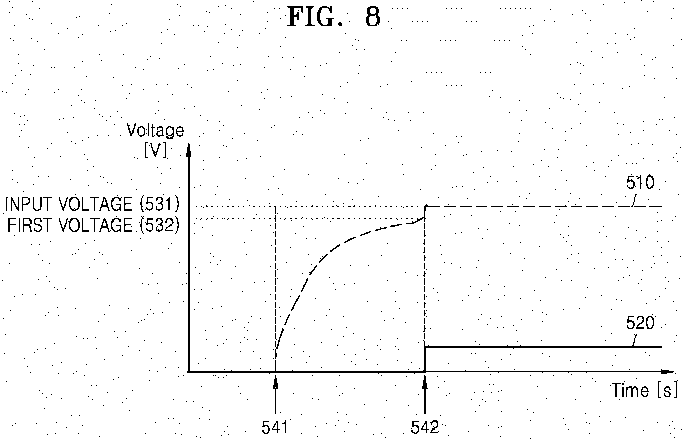

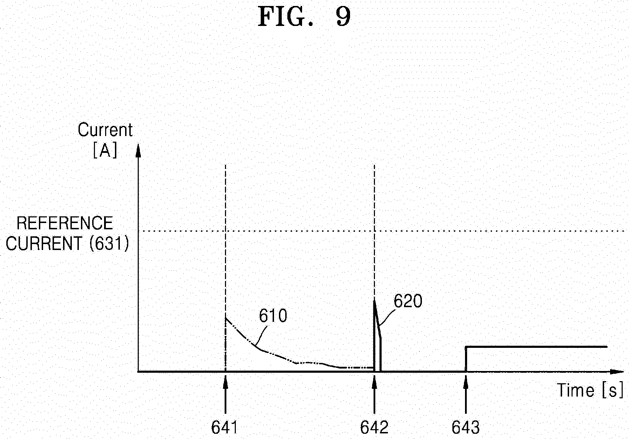

FIGS. 8 and 9 are graphs for describing a process in which the control unit applies an enable signal according to an embodiment.

FIG. 8 illustrates a voltage-time graph including a charging voltage 510 and an enable signal 520. For example, the charging voltage 510, an input voltage 531, a first voltage 532, and the enable signal 520 illustrated in FIG. 8 may respectively correspond to the charging voltage 420, the input voltage 111, the reference voltage 430, and the enable signal 440 described above with reference to FIG. 7 and the like.

Referring to FIG. 8, the power source 110 may apply the input voltage 531 starting from a first time point 541. At this time, the electronic fuse 150 may be in the off state, the power source 110 may supply power to the charging unit 120 by applying the input voltage 531 through the first path 210, and the charging voltage 510 may gradually increase as the charging unit 120 receives the power from the power source 110. In this case, since the input voltage 531 is applied through the current limiting unit 140, an inrush current that may occur during the power supply may be limited.

Thereafter, the charging voltage 510 may exceed the reference voltage 430 at a second time point 542. For example, the charging voltage 510 may exceed the reference voltage 430, which is set to the first voltage 532, at the second time point 542. As the charging voltage 510 exceeds the reference voltage 430, the initial charging completion condition may be satisfied, and the control unit 400 may output the enable signal 520 based on the satisfaction of the initial charging completion condition.

Thereafter, the electronic fuse 150 may receive the enable signal 520 output from the control unit 400, and the state of the electronic fuse 150 may transition from the off state to the on state. As the state of the electronic fuse 150 transitions, the application path of the input voltage 531 after the second time point 542 may change from the first path 210 to the second path 220.

Accordingly, during the initial charging of the charging unit 120, where it is relatively more necessary to limit an inrush current, the input voltage 531 is applied through the current limiting unit 140, thereby improving the safety of the circuit. After the initial charging completion condition is satisfied, the input voltage 531 is applied through the electronic fuse 150, which has a relatively low resistance value, thereby minimizing power consumption during the power supply process.

FIG. 9 illustrates a current-time graph including a first current 610 corresponding to the current limiting unit 140 and a second current 620 corresponding to the electronic fuse 150. For example, a first time point 641 and a second time point 642 illustrated in FIG. 9 may respectively correspond to the first time point 541 and the second time point 542 illustrated in FIG. 8.

Referring to FIG. 9, the power source 110 may start supplying power from the first time point 641. At this time, the electronic fuse 150 may be in the off state, and the power source 110 may supply power to the charging unit 120 through the first path 210, that is, through the current limiting unit 140.

Thereafter, the initial charging completion condition may be satisfied at the second time point 642, and the state of the electronic fuse 150 may transition from the off state to the on state. As the state of the electronic fuse 150 transitions, the power supply path after the second time point 642 may change from the first path 210, that is, the current limiting unit 140, to the second path 220, that is, the electronic fuse 150.

For example, the load 130 may start consuming power from a third time point 643. The power source 110 may continuously supply power corresponding to the load 130, and the electronic fuse 150 may remain in the on state to form a power supply path from the power source 110 to the charging unit 120 and the load 130.

In an embodiment, the electronic fuse 150 may remain in the on state to form a power supply path when an abnormality detection condition, such as an overcurrent, is not satisfied.

For example, the electronic fuse 150 may remain in the on state to form a power supply path when the second current 620 flowing through the electronic fuse 150 does not exceed a reference current 631.

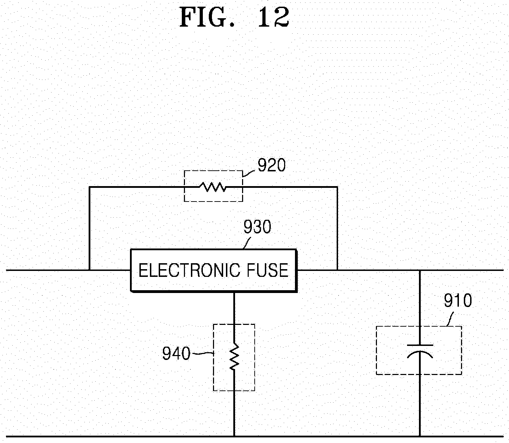

Specific situations in which the abnormality detection condition is satisfied will be described later with reference to FIG. 12 and the like.

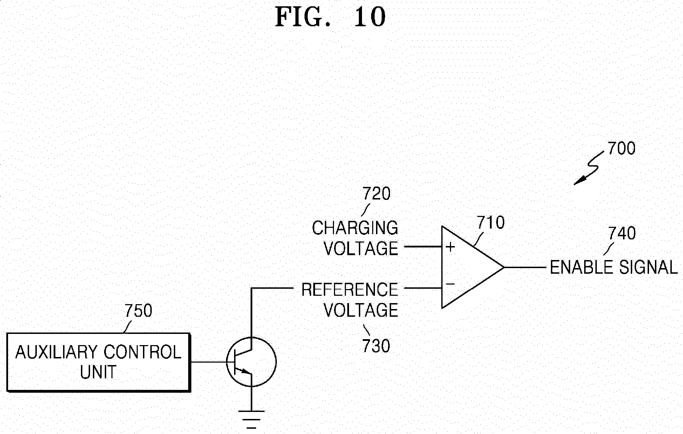

FIG. 10 is an exemplary diagram for describing a control unit including an auxiliary control unit according to an embodiment. In some embodiments, an analog comparator 710, a charging voltage 720, a reference voltage 730, and an enable signal 740 illustrated in FIG. 10 may respectively correspond to the analog comparator 410, the charging voltage 420, the reference voltage 430, and the enable signal 440 illustrated in FIG. 7.

Hereinafter, a specific process in which the reference voltage 730 is changed by an auxiliary control unit 750 will be described with reference to FIG. 10.

Referring to FIG. 10, a control unit 700 according to an embodiment may further include the auxiliary control unit 750 that changes the reference voltage 730, which is set to a first voltage, to a second voltage based on a predetermined condition being satisfied.

In an embodiment, the auxiliary control unit 750 may change the reference voltage 730 to the second voltage lower than the first voltage based on the predetermined condition being satisfied.

For example, the auxiliary control unit 750 may be connected to an input line of the reference voltage 730 and to a switching element. The auxiliary control unit 750 may change the voltage applied to the input line, through which the first voltage is being input as the reference voltage 730, to the second voltage by applying an operation signal to the switching element based on the predetermined condition being satisfied.

In an embodiment, the switching element that connects the input line of the reference voltage 730 to the auxiliary control unit 750 may include a bipolar junction transistor (BJT), but the present disclosure is not limited thereto.

In an example, the auxiliary control unit 750 may be connected to a base of an NPN-type bipolar junction transistor in which a collector is connected to the input line of the reference voltage 730 and an emitter is connected to ground. The auxiliary control unit 750 may transition the NPN-type bipolar junction transistor to an on state by applying the operation signal to the base based on the predetermined condition being satisfied, and may reduce the reference voltage 730, which represents the first voltage, to the second voltage at a ground potential by lowering a collector voltage to the ground potential.

In an embodiment, the auxiliary control unit 750 may include a memory and a processor. The memory is hardware that stores various types of data processed within the auxiliary control unit 750, and may store programs for performing operations, processing, and control of the processor.

For example, the memory may include random access memory (RAM) such as dynamic random-access memory (DRAM) or static random-access memory (SRAM), read-only memory (ROM), electrically erasable programmable read-only memory (EEPROM), CD-ROM, Blu-ray or another optical disk storage, a hard disk drive (HDD), a solid-state drive (SSD), or a flash memory.

The processor controls overall operations of the auxiliary control unit 750. For example, the processor may control the overall operations of the auxiliary control unit 750 by executing the programs stored in the memory. For example, the processor may determine whether the predetermined condition is satisfied, and may control the auxiliary control unit 750 to output a control signal for changing the reference voltage 730 from the first voltage to the second voltage based on a result of the determination.

The processor may be implemented using at least one of application-specific integrated circuits (ASICs), digital signal processors (DSPs), digital signal processing devices (DSPDs), programmable logic devices (PLDs), field-programmable gate arrays (FPGAs), controllers, microprocessors, and electrical units for performing other functions.

In an embodiment, the predetermined condition for the auxiliary control unit 750 to change the reference voltage 730 may include receiving a user input.

For example, the processor of the auxiliary control unit 750 may determine that a user input has been received through a user interface connected to the auxiliary control unit 750, and may control the auxiliary control unit 750 to output a control signal for changing the reference voltage 730.

That is, the control unit 700 may output the enable signal 740 for transitioning the state of the electronic fuse 150 by reducing the reference voltage 730 through the operation of the auxiliary control unit 750 based on the user input, even when the charging voltage 720 does not exceed the reference voltage 730 set to the first voltage.

In another embodiment, the predetermined condition for the auxiliary control unit 750 to change the reference voltage 730 may be set based on the charging voltage 720 and a charging time. The auxiliary control unit 750 may obtain the charging voltage 720 collected by at least one voltage sensor and use the charging voltage 720 to determine whether the predetermined condition is satisfied. In some embodiments, criteria for satisfying the predetermined condition may be stored in the memory of the auxiliary control unit 750.

For example, the processor of the auxiliary control unit 750 may determine, as the predetermined condition stored in the memory, that the charging voltage 720 is equal to or less than the reference voltage 730 and that the charging time exceeds a threshold time, and may control the auxiliary control unit 750 to output a control signal for changing the reference voltage 730.

That is, the control unit 700 may output the enable signal 740 for transitioning the state of the electronic fuse 150 by reducing the reference voltage 730 through the operation of the auxiliary control unit 750, even when the charging voltage 720 does not exceed the reference voltage 730 set to the first voltage, when the threshold time has elapsed from the start of charging.

In another example, the processor of the auxiliary control unit 750 may determine, as the predetermined condition stored in the memory, that the charging voltage 720 remains above a threshold voltage but still below the reference voltage 730 for a period equal to or longer than the threshold time, and may control the auxiliary control unit 750 to output a control signal for changing the reference voltage 730.

That is, the control unit 700 may output the enable signal 740 for transitioning the state of the electronic fuse 150 by reducing the reference voltage 730 through the operation of the auxiliary control unit 750, even when the charging voltage 720 does not exceed the reference voltage 730 set to the first voltage, when the charging voltage 720, which exceeds the threshold voltage, fails to exceed the reference voltage 730 set to the first voltage for the threshold time despite power being supplied.

Through this, the control unit 700 may improve the stability of the circuit by performing analog control using the charging voltage 720 and the first voltage through inclusion of the analog comparator 710, and may further perform detailed control of the electronic fuse 150 through digital control by further including the auxiliary control unit 750 in situations in which manual operation of the electronic fuse 150 is required or in predefined special situations.

FIG. 11 is a graph for describing a process of changing a reference voltage according to an embodiment. FIG. 11 illustrates a voltage-time graph including a charging voltage 810 and a reference voltage 820. In some embodiments, the charging voltage 810, the reference voltage 820, a first voltage 832, and a second voltage 833 illustrated in FIG. 11 may respectively correspond to the charging voltage 720, the reference voltage 730, the first voltage, and the second voltage described above with reference to FIG. 10.

Referring to FIG. 11, the power source 110 may apply an input voltage 831 starting from a first time point 841. At this time, the electronic fuse 150 may be in the off state, the power source 110 may supply power to the charging unit 120 by applying the input voltage 831 through the first path 210, and the charging voltage 810 may gradually increase as the charging unit 120 receives power from the power source 110. In this case, since the input voltage 831 is applied through the current limiting unit 140, an inrush current that may occur during the power supply may be limited.

Thereafter, the auxiliary control unit 750 may change the reference voltage 820 at a second time point 842 based on a predetermined condition being satisfied. For example, the auxiliary control unit 750 may change the reference voltage 820 from the first voltage 832 to the second voltage 833.

In this case, the predetermined condition may include, but is not limited to, a condition set based on a user input being received and/or the charging voltage 810 and a charging time, as described above with reference to FIG. 10.

As the auxiliary control unit 750 changes the reference voltage 820, the charging voltage 810 may exceed the reference voltage 820, and the control unit 700 may output the enable signal 740 based on the initial charging completion condition being satisfied.

Thereafter, the electronic fuse 150 may receive the enable signal 740 output from the control unit 700, and the state of the electronic fuse 150 may transition from the off state to the on state. As the state of the electronic fuse 150 transitions, the application path of the input voltage 831 after the second time point 842 may change from the first path 210 to the second path 220.

Accordingly, during the initial charging of the charging unit 120, where limiting inrush current is relatively more critical, the input voltage 831 may be applied through the current limiting unit 140, thereby improving the safety of the circuit. After the initial charging completion condition is satisfied, the input voltage 831 may be applied through the electronic fuse 150, which has a relatively low resistance value, thereby minimizing power consumption during power supply.

In addition, during the latter part of the initial charging, in which the likelihood of inrush current occurrence is relatively low, unnecessary power loss that may occur due to internal or external environmental factors of the system may be prevented.

FIG. 11 further illustrates a charging voltage 811 that exceeds the first voltage 832 only at a third time point 843 in a case in which the operation of the auxiliary control unit 750 is not performed, that is, when the reference voltage 820 is not changed.

By including the auxiliary control unit 750, the control unit 700 may prevent unnecessary power loss that may occur due to power being supplied through a high-resistance path between the second time point 842 and the third time point 843, i.e., during the latter part of the initial charging when the likelihood of inrush current occurrence is relatively low.

FIG. 12 is a diagram illustrating a charging circuit including a reference resistor according to an embodiment.

The power supply including the charging circuit 100 may apply the input voltage 111 to the charging unit 120 through the current limiting unit 140 based on the electronic fuse 150 being in the first state, and may apply the input voltage 111 to the charging unit 120 through the electronic fuse 150 based on the electronic fuse 150 being in the second state.

In an embodiment, the state of the electronic fuse 150 may transition from the second state to the first state based on the condition that the electronic fuse 150 is in the second state and an abnormality detection condition is satisfied. In this case, the first state may represent the off state of the on/off state, and the second state may represent the on state of the on/off state.

In an embodiment, the abnormality detection condition may include detection of at least one abnormal state among overcurrent, overvoltage, high temperature, and reverse polarity. Through this, when the abnormality detection condition is satisfied, the power supply path of the power source 110 may be changed from the second path 220, which has a relatively low resistance, to the first path 210, which has a relatively high resistance, and the charging circuit 100 may be protected by reducing the current flowing through the charging circuit 100 when an abnormality occurs in the charging circuit 100.

Hereinafter, a method of setting a reference for overcurrent occurrence as an example of an abnormality detection condition will be described with reference to FIG. 12.

Referring to FIG. 12, the charging circuit 100 according to an embodiment may include a charging unit 910, a current limiting unit 920, an electronic fuse 930, and a reference resistor 940.

In an embodiment, the abnormality detection condition may include detection of overcurrent occurrence, and the charging circuit 100 according to an embodiment may include the reference resistor 940 connected to the electronic fuse 930 and used to set a reference current value for determining overcurrent occurrence.

In an embodiment, one end of the reference resistor 940 may be connected to the electronic fuse 930, and another end of the reference resistor 940 may be connected to a negative line connected to a negative terminal of the charging unit 910. In an example, when the negative terminal of the charging unit 910 forms the ground, one end of the reference resistor 940 may be connected to the electronic fuse 930, and another end of the reference resistor 940 may be connected to the ground.

In an embodiment, a reference current value for determining overcurrent occurrence may be set by adjusting a resistance value of the reference resistor 940. For example, the reference current 631 illustrated in FIG. 9 may be set by adjusting the resistance value of the reference resistor 940.

In an embodiment, the electronic fuse 930 may include at least one sensor that detects a voltage applied across the reference resistor 940. In an embodiment, a voltage divided by the resistance of the reference resistor 940 with respect to power of the electronic fuse 930 may be applied across the reference resistor 940. In this case, the voltage applied across the reference resistor 940 may drop more significantly as the resistance value of the reference resistor 940 increases, and may drop less as the resistance value of the reference resistor 940 decreases.

Accordingly, when the resistance value of the reference resistor 940 is designed to be high, a large voltage drop occurs even at a small current, so that the reference current value at which the electronic fuse 930 recognizes overcurrent occurrence may be increased. Conversely, when the resistance value of the reference resistor 940 is designed to be low, a sufficient voltage drop occurs only at a large current, so that the reference current value at which the electronic fuse 930 recognizes overcurrent occurrence may be decreased. Through this, an upper limit of current suitable for the environment in which the charging circuit 100 is used may be easily set.

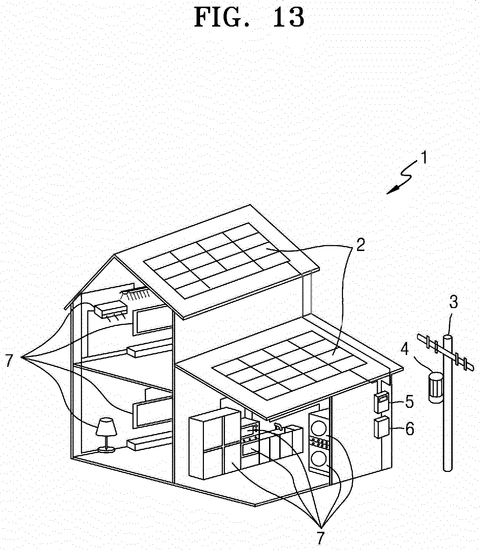

FIG. 13 is an exemplary diagram for describing a power supply system according to an embodiment. The power supply system illustrated in FIG. 13 may correspond to the power supply system 10 described above with reference to FIG. 1 and the like, and may be implemented to include the charging circuit 100 described above with reference to FIG. 4 and the like.

For example, the power supply system illustrated in FIG. 13 may be implemented as any of the power supply systems 20, 30, and 40, in which individual components are combined by various ways, as described above with reference to FIGS. 2 and 3, but the present disclosure is not limited thereto.

Referring to FIG. 13, at least one photovoltaic module 2 may be installed on a roof of a building 1 to generate energy. A plurality of photovoltaic modules 2 may be connected to each other to form a photovoltaic module array.

Commercial power transmitted from an external power grid through a utility pole 3 may be supplied to the building 1 through a transformer 4.

In addition, when a separate energy storage system (ESS) is provided in the power supply system, energy generated by the photovoltaic module 2 or energy supplied through the transformer 4 may be stored in the energy storage system.

An inverter 6 may obtain energy generated by the photovoltaic module 2, energy supplied from the external power grid through the transformer 4, and/or energy stored in the energy storage system, and may perform appropriate conversion to supply power into the building 1.

A plurality of home appliances 7 may operate by consuming power supplied from at least one of the energy generated by the photovoltaic module 2, the energy supplied from the external power grid through the transformer 4, and the energy stored in the energy storage system through the inverter 6. In some embodiments, a power meter 5 may measure the amount of power consumed in the building 1.

In power supply, the charging circuit 100 according to an embodiment may be provided downstream of at least one of the photovoltaic module 2 that generates energy, the transformer 4 that receives power from an external power grid, and the energy storage system that stores energy, thereby forming a power supply path to the building 1. In this case, at least one of the photovoltaic module 2, the transformer 4 that receives power from an external power grid, and the energy storage system may be implemented as the power source 110 of the charging circuit 100 described above with reference to FIG. 4 and the like. For example, at least one of the photovoltaic module 2, the transformer 4, and the energy storage system may be implemented as the power source 110 of the charging circuit 100, which is described above with reference to FIG. 4, through an SMPS.

In power supply, when the charging circuit 100 according to an embodiment is provided upstream of the inverter 6, the inverter 6 and/or the plurality of home appliances 7 may be implemented as the load 130 described above with reference to FIG. 4 and the like. In some embodiments, the plurality of home appliances 7 may be home appliances that use DC power.

In power supply, when the charging circuit 100 according to an embodiment is provided downstream of the inverter 6, the plurality of home appliances 7 may be implemented as the load 130 described above with reference to FIG. 4 and the like. In addition, the inverter 6 may be implemented as the power source 110 of the charging circuit 100, which is described above with reference to FIG. 4 and the like, through an SMPS.

According to the above-described technical solution of the present disclosure, inrush current during initial charging can be prevented and abnormal conditions can be efficiently addressed by using an electronic fuse, thereby enabling various functions for safely protecting the circuit to be implemented with a simple design.

Further, according to the above-described technical solution of the present disclosure, power efficiency and circuit stability can be improved by switching a power supply path according to specific conditions, and control stability can be enhanced by controlling an electronic fuse using analog control alone or in combination with partial digital control.

The effects according to embodiments are not limited to the above-mentioned effects, and other effects not mentioned may be clearly understood by those skilled in the art from the description of the present disclosure.

The use of all examples or exemplary terms (for example, or the like) in the present disclosure is to simply describe the present disclosure in detail, and unless the range of the present disclosure is not limited by the examples or the exemplary terms unless limited by the claims. Also, numerous modifications and adaptations will be readily apparent to one of ordinary skill in the art without departing from the spirit and scope of the present disclosure.

Therefore, it should be noted that the spirit of the present disclosure is not limited to the embodiments described above, and not only the claims to be described below, but also all ranges equivalent to or equivalently changed from the claims fall within the scope of the spirit of the present disclosure.

## Claims

1. A charging circuit comprising:
a charging unit connected to a power source and a load, and configured to receive an input voltage applied from the power source;
a current limiting unit connecting the power source to the charging unit; and
an electronic fuse connecting the power source to the charging unit in parallel with the current limiting unit,
wherein the input voltage is applied through the current limiting unit when the electronic fuse is in a first state, and through the electronic fuse when the electronic fuse is in a second state,
a state of the electronic fuse transitions from the first state to the second state based on an initial charging completion condition being satisfied while the electronic fuse is in the first state, and
the state of the electronic fuse transitions from the second state to the first state based on an abnormality detection condition being satisfied while the electronic fuse is in the second state.

2. The charging circuit of claim 1, further comprising a control unit configured to apply an enable signal to the electronic fuse based on the initial charging completion condition being satisfied,
wherein the state of the electronic fuse transitions from the first state to the second state in response to the enable signal being applied.

3. The charging circuit of claim 2, wherein the initial charging completion condition includes a charging voltage of the charging unit exceeding a reference voltage.

4. The charging circuit of claim 3, wherein the control unit includes an analog comparator configured to compare the charging voltage and the reference voltage and output the enable signal based on a result of the comparison.

5. The charging circuit of claim 4, wherein
the control unit further includes an auxiliary control unit configured to change the reference voltage, which is set to a first voltage, to a second voltage based on a predetermined condition being satisfied, and
the first voltage is set based on a magnitude of the input voltage.

6. The charging circuit of claim 1, wherein
the abnormality detection condition includes a detection of an overcurrent occurrence, and
the charging circuit further comprises a reference resistor connected to the electronic fuse and used to set a reference current value for determining the overcurrent occurrence.

7. The charging circuit of claim 1, wherein the charging unit includes a capacitor configured to store an electric charge in response to the input voltage being applied.

8. The charging circuit of claim 1, wherein the current limiting unit includes an initial charging resistor having a predetermined resistance value determined based on the input voltage and a preset maximum inrush current.

9. The charging circuit of claim 1, wherein the charging unit is further configured to supply a power to the load when power delivery from the power source to the load is interrupted.

10. A power supply comprising:
a power source configured to supply a power to a load;
a charging unit connected to the power source and the load, configured to receive an input voltage applied from the power source, and configured to supply the power to the load when power delivery from the power source to the load is interrupted;
a current limiting unit connecting the power source to the charging unit; and
an electronic fuse connecting the power source to the charging unit in parallel with the current limiting unit,
wherein the input voltage is applied through the current limiting unit when the electronic fuse is in a first state, and through the electronic fuse when the electronic fuse is in a second state,
a state of the electronic fuse transitions from the first state to the second state based on an initial charging completion condition being satisfied while the electronic fuse is in the first state, and
the state of the electronic fuse transitions from the second state to the first state based on an abnormality detection condition being satisfied while the electronic fuse is in the second state.

11. The power supply of claim 10, further comprising a control unit configured to apply an enable signal to the electronic fuse based on the initial charging completion condition being satisfied,
wherein the state of the electronic fuse transitions from the first state to the second state in response to the enable signal being applied.

12. The power supply of claim 11, wherein the initial charging completion condition includes a charging voltage of the charging unit exceeding a reference voltage.

13. The power supply of claim 12, wherein the control unit includes an analog comparator configured to compare the charging voltage and the reference voltage and output the enable signal based on a result of the comparison.

14. The power supply of claim 13, wherein
the control unit further includes an auxiliary control unit configured to change the reference voltage, which is set to a first voltage, to a second voltage based on a predetermined condition being satisfied, and
the first voltage is set based on a magnitude of the input voltage.

15. A charging method using a charging circuit, the method comprising:
applying an input voltage to a charging unit through a current limiting unit based on an electronic fuse being in a first state; and
applying the input voltage to the charging unit through the electronic fuse based on the electronic fuse being in a second state,
wherein a state of the electronic fuse transitions from the first state to the second state based on an initial charging completion condition being satisfied while the electronic fuse is in the first state, and
the state of the electronic fuse transitions from the second state to the first state based on an abnormality detection condition being satisfied while the electronic fuse is in the second state.
